# EUROPÄISCHE PATENTSCHRIFT

(11) **EP 2 817 437 B1**
(45) Veröffentlichungstag und Bekanntmachung des Hinweises auf die Patenterteilung: **28.12.2016**
(21) Anmeldenummer: 13716181.6
(22) Anmeldetag: 22.02.2013
(51) Int. Cl.: C25B 1/00, C25B 9/00, C25B 11/04

(54) **PHOTOVOLTAISCHE HYBRID-ELEKTROLYSEZELLE**
PHOTOVOLTAIC HYBRID ELECTROLYSIS CELL
CELLULE D'ÉLECTROLYSE HYBRIDE PHOTOVOLTAÏQUE

(30) Priorität: 23.02.2012 DE 102012003597
(43) Veröffentlichungstag der Anmeldung: 31.12.2014
(73) Patentinhaber: Helmholtz-Zentrum Berlin für Materialien und Energie GmbH, 14109 Berlin (DE)
(72) Erfinder: FIECHTER, Sebastian, 14109 Berlin (DE); SCHLATMANN, Rutger, 14197 Berlin (DE); STANNOWSKI, Bernd, 12587 Berlin (DE)
(86) Internationale Anmeldenummer: PCT/DE2013/000108
(87) Internationale Veröffentlichungsnummer: WO 2013/149605

(56) Entgegenhaltungen:
- US-A- 4 722 776
- US-A1- 2008 223 439
- BERNHARD KAISER ET AL: "Direct photoelectrochemical conversion of sun light into hydrogen for chemical energy storage", BUNSEN-MAGAZIN, Bd. 13, Nr. 4, 1. Juli 2011 (2011-07-01), Seiten 104-111, XP055065305, in der Anmeldung erwähnt

## Beschreibung

Die Erfindung bezieht sich auf eine photovoltaische Hybrid-Elektrolysezelle, die der direkten lichtinduzierten Wasserzersetzung zur Wasserstofferzeugung bei einer Zersetzungsspannung oberhalb 1,23 V dient, mit einem transparenten Superstrat mit einer Oberseite, durch die Betrieb das Licht hindurchfällt, und einer Unterseite, die mit einer transparenten elektrisch leitfähigen Leitschicht zumindest teilweise bedeckt ist, an deren Frontseite zumindest eine Kathode anschließt, sowie mit einer Anode und mit einem halbleitenden Schichtaufbau mit einer für den Lichteinfall vorgesehenen Frontseite und einer eine elektrisch leitende, lichtundurchlässige Rückkontaktschicht tragenden Rückseite, wobei die Anode und die Kathode elektrisch leitend miteinander verbunden sind, der Anode eine anodische Elektrolytkammer mit einem wässrigen Elektrolyten und einem Sauerstoff-Katalysator und der Kathode eine kathodische Elektrolytkammer mit einem wässrigen Elektrolyten und einer Wasserstoff-Katalysatorschicht zuordnet sind und die anodische und die kathodische Elektrolytkammer durch eine protonenleitende Membran, die gegen die Kathode elektrisch isoliert und senkrecht zum halbleitenden Schichtaufbau angeordnet ist, voneinander separiert sind, sowie mit einer Isolationsschicht zwischen der Wasserstoff-Katalysatorschicht und der Rückkontaktschicht der Kathode..

Bei der direkten photovoltaischen Wasserelektrolyse (mit wässrigem Elektrolyten) wird eingestrahlte Solarenergie direkt, d.h. ohne Zwischenerzeugung und -speicherung von Solarstrom, eingesetzt, um Wasser zu spalten. Die Kombination von Solarstromerzeugung und Elektrolyse wird durch die Bezeichnung "Hybrid" aufgezeigt. Bei dieser Art der Erzeugung von Primärbrennstoff (Wasserstoff) werden zwei verschiedene Lichtreaktionen, zuerst eine photovoltaische, dann eine katalytische Reaktion hintereinander geschaltet. Eine elektrolytische Wasserzersetzung tritt oberhalb einer erzeugten Zersetzungsspannung von 1,23 V ein. Wird ein Halbleiter mit Photonen, deren Energie größer als die Bandlücke des Halbleiters ist, bestrahlt, werden die Photonen absorbiert und Elektron-Loch-Paare im Halbleiter generiert. Zwischen zwei dem Halbleiter zugeordneten Elektroden baut sich eine Photospannung auf, die im Elektrolyten als Zersetzungsspannung wirkt, oberhalb der die Photoelektrolyse von Wasser eintritt. Diese besteht aus zwei chemischen Teilreaktionen, die an den beiden Elektroden (Anode mit anodischer wässriger Elektrolytkammer, Erzeugung von Sauerstoff, Kathode mit kathodischer wässriger Elektrolytkammer, Erzeugung von Wasserstoff) ablaufen. Das Gesamt-Reaktionsschema dieser Redoxreaktion lautet: 2H₂O (flüssig) ⇒ 2H₂ (gasförmig) und O₂ (gasförmig). Positiv geladene Oxonium-Ionen (H₃O⁺) und Wassermoleküle wandern im elektrischen Feld zur Kathode, wo sie ein Elektron e⁻ aufnehmen. Dabei entstehen Wasserstoff-Atome, die sich mit einem weiteren, durch Reduktion entstandenen H-Atom zu einem Wasserstoffmolekül vereinigen. Der gasförmige Wasserstoff steigt an der Kathode auf (2H₃O⁺ + 2e⁻ ⇒ H₂ + 2H₂O oder auch 2H₂O + 2e⁻ ⇒ H₂ + 2OH⁻). An der positiven Anode steigt unter Elektronenabgabe gasförmiger Sauerstoff auf; die entstandenen Protonen wandern durch eine protonenleitende Membran in Richtung Kathode (40H⁻ ⇒ O₂ + 2H₂O + 4e⁻ oder auch 6 H₂O ⇒ O₂ + 4H₃O⁺ + 4e⁻). Durch den Einsatz von Katalysatoren werden Überspannungen, die an den Grenzflächen der Elektroden zum Elektrolyten auftreten, reduziert. Anode und Kathode sind zur Leitung der Elektronen elektrisch leitend miteinander verbunden. Anodische und kathodische wässrige Elektrolytkammer (pH-Wert bevorzugt pH7) sind zur Leitung der Protonen durch eine protonenleitende Membran miteinander verbunden und ansonsten voneinander separiert.

### Stand der Technik

Aus der DE 27 52 596 A1 (siehe Figur 2 ebenda) ist eine photovoltaische Hybrid-Elektrolysezelle bekannt, bei der Anode und Kathode als halbleitende Photoelektroden ausgebildet und nebeneinander auf einer elektrisch leitenden Rückkontaktschicht angeordnet sind. In Richtung auf den Lichteinfall sind die anodische und die kathodische Elektrolytkammer vor den Photoelektroden angeordnet, der Lichteinfall erfolgt durch den Elektrolyten hindurch. Die Wasserzersetzung im wässrigen Elektrolyten findet an der Grenzfläche Halbleiter/Elektrolyt statt, sodass eine komplexe Anpassung der elektrochemischen Potenziale zur Wasserstoff- und Sauerstoffentwicklung an die Absolutlagen von Leitungs- und Valenzband der für die Photoelektroden verwendeten Halbleiter erforderlich ist. Katalysatoren werden nicht eingesetzt.

Aus der US 3 925 212 A (siehe Figur 1 ebenda) ist eine photovoltaische Hybrid-Elektrolysezelle bekannt, bei der Anode und Kathode als halbleitende Photoelektroden ausgebildet und beiderseits des Elektrolyten in einer gemeinsamen Elektrolytkammer mit wässrigem Elektrolyten angeordnet sind. Die Belichtung erfolgt durch ein Glassubstrat, auf dessen Innenseite eine n-leitende Halbleiterschicht abgeschieden ist. Die Gegenelektrode besteht aus einem p-leitenden Halbleiter kleinerer Bandlücke, der auf einem metallischen Substrat abgeschieden ist. Auch hier findet die Zersetzung an der Grenzfläche Halbleiter/Elektrolyt statt. Die Elektrolytkammer ist nicht durch eine Membran aufgeteilt, Wasserstoff und Sauerstoff werden gemeinsam abgeführt. Katalysatoren werden nicht eingesetzt.

Aus der DE 26 50 267 A1 (siehe Figur 3 ebenda) ist eine photovoltaische Hybrid-Elektrolysezelle bekannt, bei der nur eine Elektrode als halbleitende Photoelektrode aus einer dünnen Halbleiterschicht ausgebildet ist. Die andere Elektrode ist als reine Metallelektrode ausgebildet. Beide Elektroden sind beiderseits des wässrigen Elektrolyten angeordnet, wobei die Elektrolytkammer durch eine großflächige Membran aufgeteilt ist. Die Belichtung erfolgt durch ein Glassubstrat, auf dessen Rückseite die Photoelektrode angeordnet ist, dabei steht der Halbleiter in direktem Kontakt mit dem wässrigen Elektrolyten. Die Zersetzung findet also an der aktiven Grenzfläche zwischen wässrigem Elektrolyt und Halbleiter statt. Zur Erzeugung der erforderlichen Zersetzungsspannung ist eine zusätzliche Spannungsquelle vorgesehen. Katalysatoren werden nicht eingesetzt.

In der DE 10 2004 050 638 B3 (siehe Figur 4 ebenda) wird eine photovoltaische Elektrolysezelle beschrieben, bei der die photovoltaische Zelle von der elektrochemischen Zelle räumlich getrennt ist Die photovoltaische Zelle ist zwar zur Kühlung auf einem Kupferblech montiert, das seinerseits auf der Endplatte der Elektrolysezelle montiert ist, aber nicht als Elektrolytkontakt genutzt wird. Front- und Rückkontakt der Solarzelle sind über kurze Stromleitungen mit den Katalysatorschichten der Elektrolysezelle, die durch eine relativ großflächige Polymer-Elektrolyt-Membran (PEM) geteilt wird, verbunden.

Aus der US 4 722 776 A ist eine Elektrolysezelle bekannt, bei der die Halbleiterschichten vom Elektrolyten durch die Katalysatorschichten räumlich getrennt sind. Die Katalysatorschichten erfüllen somit zwei Funktionen: neben der Forcierung der Elektrolyse dienen sie noch dem Schutz der Halbleiterschichten vor dem Elektrolyten. Dabei sind die Katalysatoren auf metallisch leitfähige Rückkontaktschichten aufgebracht, die aber ausschließlich dem Einsammeln der erzeugten Ladungsträger dienen.

Aus der **Veröffentlichung I** "Basics concepts of photoelectrochemical solar energy conversion systems" (von. S. Fiechter et al., Advances in Applied Ceramics 2012 Vol. 111 No 1&2, pp 39-41, vergleiche Figur 5 ebenda) ist das Konzept einer wasserspaltenden Membran, auf der Kathodenseite bestehend aus einem mit einem Metall beschichteten Substrat (Molybdän auf Titanfolie), auf dem zur Bildung einer Photokathode eine p-leitende Absorberschicht (z.B. eine Chalkopyritschicht CuInSe₂) abgeschieden wurde, bekannt. Als n-leitender transparenter Frontkontakt wurde ein Oxid (Niob-dotiertes TiO₂, abgeschieden mittels reaktivem Sputtern) gewählt, das unter Belichtung korrosionsstabil im Kontakt mit einem wässrigen Elektrolyten ist. Um das katalytische Verhalten der Kathode im Kontakt mit dem wässrigen Elektrolyten zu verbessern, wurden Platin-Nanopartikel auf der Oberfläche der Kathode abgeschieden. Auf der Anodenseite wurde eine poröse, n-leitende TiO₂-Schicht gemeinsam mit RuO₂-Partikeln als Co-Katalysator abgeschieden, um die Überspannung bei der Sauerstoffentwicklung zu minimieren.

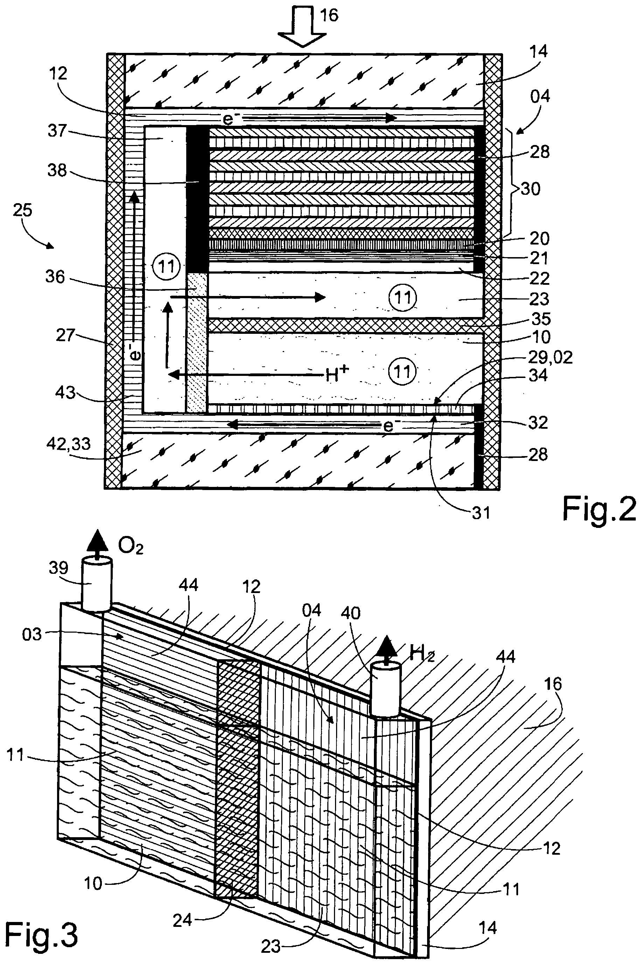

Aus der **Veröffentlichung II** "Wireless Solar Water Splitting Using Silicon-Based Semiconductors and Earth-Abundant Catalysts" (von S.Y. Reece et al., Science Express, 29.September 2011, pp 1-8 /10.1126/science.1209816, 5, Vortrag auf Gerischer Symposium, Deutsche Bunsen-Gesellschaft für Physikalische Chemie, Berlin 22-24 June 2011, vergleiche Figur 3b ebenda) ist eine Photokathode als Tripelzelle auf Si-Basis (npp⁺-Struktur) in kommerzieller PV-Struktur bekannt, deren transparenter metallisch leitender Frontkontakt mit dem Elektrolyten in Kontakt steht. Der Lichteinfall auf die Triplezelle erfolgt jedoch immer durch den Elektrolyten hindurch. Problematisch ist dabei, dass das Licht bei dieser Anordnung am Kontakt Halbleiter/Elektrolyt noch einen auf dem Halbleiter abgeschiedene Katalysatorschicht aus einem neuartigen sauerstoffentwickelnden CoOₓ-Katalysator passieren muss.

Aus der **Veröffentlichung III** "Direct photoelectrochemical conversion of sun light into hydrogen for chemical energy storage" (von B. Kaiser et al., Bunsen-Magazin, 13. Jahrgang, 4/2011, pp 104-111, vergleiche Figuren 2c, 3c ebenda) ist eine photovoltaische Hybrid-Elektrolysezelle bekannt, die zwei nebeneinander auf demselben metallischen, lichtundurchlässigen Rückkontakt angeordnete Elektrode, beide als Photoelektroden ausgebildet, mit davor liegender anodischer und kathodischer Elektrolytkammer mit wässrigem Elektrolyten, die durch einen protonenleitende Membran voneinander getrennt sind, aufweist. Die Lichteinstrahlung erfolgt durch den Elektrolyten und (in nur geringem Maße) durch seitliche Glaswandungen. Die chemische Reaktion findet an der Grenzfläche zwischen Halbleiter und Elektrolyt statt, wodurch wiederum eine aufwändige und einschränkende Anpassung der elektrochemischen Potenziale zur Wasserstoff- und Sauerstoffentwicklung an die Absolutlagen von Leitungs- und Valenzband der für die Photoelektroden verwendeten Halbleiter erforderlich ist. Die halbleitenden Absorberschichten werden gegenüber Korrosion durch den Elektrolyten durch zusätzliche Pufferschichten geschützt. Auf den Pufferschichten ist (zumindest bei der Photokathode) eine Katalysatorschicht aus Nanopartikeln angeordnet, die aufgrund ihrer Anordnung auf der Lichteinfallseite eine Verschattung und damit eine Effizienzminderung bewirkt. Die bekannte photovoltaische Hybrid-Elektrolysezelle ist besonders flach ausgebildet, wodurch nur eine kleinflächige protonenleitende Membran als Trennwand zwischen den Elektrolytkammern benötigt wird.

Der der Erfindung nächstliegende Stand der Technik wird in der Offenlegungsschrift US 2008/0223439 A1 offenbart. Bei der beschriebenen photovoltaischen Hybrid-Elektrolysezelle fällt das Licht durch die Oberseite eines transparenten Superstrats. Dessen Unterseite ist teilweise mit einer transparenten elektrisch leitfähigen Leitschicht bedeckt. Zur Bildung von in Reihe geschalteten einzelnen halbleitenden Schichtaufbauten ist die Leitschicht jedoch in einzelne Abschnitte strukturiert. Der Stromfluss fließt von einem Abschnitt über einen halbleitenden Schichtaufbau in den nächsten Abschnitt. An einen Abschnitt der transparenten Leitschicht schließt eine Wasserstoff-Katalyseschicht direkt, d.h. ohne Einbeziehung einer PV-Zelle, an und bildet eine Kathode. Da aber die transparente Leitschicht nicht lichtabsorbierend wirkt, tritt kein innerer Photoeffekt unter Lichteinfall auf und es handelt sich bei der Kathode um eine reine Dunkelkathode, die ohne Lichteinfall arbeitet. Zur Generierung von Wasserstoff muss die Dunkelkathode p-leitend sein. Somit muss auch die transparente Leitschicht, mit der die Dunkelkathode elektrisch leitend verbunden ist, p-leitend sein. Hierfür gibt es aber nur sehr wenige Materialien zur Realisierung. Alle gebräuchlichen TCO-Schichten sind n-leitend. Im Gegensatz zur Dunkelkathode ist die Anode grundsätzlich als Photoanode ausgebildet, da sie über den inneren Photoeffekt in den halbleitenden Schichtaufbauten mit Elektronen versorgt wird. Die Wasserstoffausbeute ist damit abhängig von der Sauerstoffausbeute, die wiederum vom Lichteinfall in die Photoanode abhängig ist. Weiterhin ist die protonenleitende Membran zwischen der anodischen und der kathodischen Elektrolytkammer senkrecht zum halbleitenden Schichtaufbau angeordnet und weist damit eine relativ kleine Fläche auf, was sich kostengünstig auswirkt. Weiterhin ist noch eine Isolationsschicht zwischen der Wasserstoff-Katalysatorschicht und der Rückkontaktschicht der Dunkelkathode und teilweise auch zwischen der Sauerstoff-Katalysatorschicht und der Rück der Photoanode vorgesehen. Hierbei handelt es sich aber um eine elektrisch nichtleitende Schicht zur elektrischen Isolierung von Photoanode und Dunkelkathode. Ein spezieller Wasserstoffdiffusionsschutz besteht nicht, sodass es zu einer Wasserstoffversprödung der Dunkelkathode im Betrieb kommen kann. Ebenso wird die Rückkontaktschicht auf der Dunkelkathode von einer korrosionsfesten wasserstoffentwickelnden Katalysatorschicht geschützt und ist selbst nicht korrosionsfest

### Aufgabenstellung

Die **Aufgabe** für die vorliegende Erfindung ist daher darin zu sehen, die eingangs beschriebene gattungsgemäße photovoltaische Elektrolysezelle so weiterzubilden, dass eine Ausbildung der Kathode unabhängig von der Leitschicht und mit sicherem Schutz vor Wasserstoffversprödung möglich ist. Der Wasserstoffumsatz soll in direkter Abhängigkeit vom Lichteinfall in die Kathode erfolgen. Weiterhin soll der Herstellungsaufwand, insbesondere bei der Leitschicht und der Größe der protonenleitenden Membran, verringert werden. Alle Maßnahmen sollen zu einer Effizienzsteigerung der photovoltaischen Hybrid-Elektrolysezelle bei der Wassererzeugung in weitgehender Unabhängigkeit von der aktuellen Lichteinstrahlung führen. Die **Lösung** für diese Aufgabe ist dem Hauptanspruch zu entnehmen. Vorteilhafte Modifikationen der erfindungsgemäßen photovoltaische Hybrid-Elektrolysezelle werden in den Unteransprüchen aufgezeigt und im Nachfolgenden im Zusammenhang mit der Erfindung näher erläutert.

Bei der beanspruchten photovoltaischen Hybrid-Elektrolysezelle ist erfindungsgemäß die Kathode als Photokathode mit ein- oder mehrfachen Dünnschicht-Halbleiterstrukturen ausgebildet. Somit wird die notwendige Bandverbiegung der Photokathode an der Rückkontaktschicht durch die Halbleiterstruktur bestimmt und nicht durch die Leitfähigkeit der Leitschicht auf der Vorderseite der Halbleiterstruktur. Herkömmliche pin-Strukturen können problemlos eingesetzt werden, eine Abhängigkeit von der Leitfähigkeit der Leitschicht besteht nicht. Weiterhin ist erfindungsgemäß die Isolationsschicht als elektrisch leitfähige Wasserstoff-Barriereschicht ausgebildet und ausschließlich auf der Rückkontaktschicht der Photokathode, die aus einem korrosionsbeständigen Material besteht, angeordnet. Somit ist die Photokathode sicher vor Wasserstoffversprödung im Betriebsfall geschützt. Eine Degradation der Halbleiterschicht durch eine teilweise Einlagerung des bei der Wasserspaltung gebildeten Wasserstoffs ist vermieden. Besonders bei Silizium, mit Wasserstoff "legierten" Siliziumstrukturen und amorphen Silizium-Strukturen, die als leicht verfügbare Elemente in Dünnschichtstrukturen in der Praxis aus Kostengründen zum Einsatz kommen, ist diese blockierende Schicht von besonderer Bedeutung, da deren Dotierung mit Wasserstoff die Bandlücke des Absorbers und damit die Funktion der Photovoltaikzelle festlegt und beeinträchtigt. Gleichzeitig wird auch die metallische Rückkontaktschicht, die mit dem Elektrolyten Kontakt hat, gegen die Diffusion des Wasserstoffs geschützt. Schließlich ist die Leitschicht erfindungsgemäß noch als durchgängige Schicht auf der Unterseite des Superstrats ausgebildet. Aufwändige Strukturierungsschritte der Leitschicht entfallen. Der Strom wird direkt über die durchgängige Leitschicht geleitet.

Desweiteren ist bei der beanspruchten photovoltaischen Hybrid-Elektrolysezelle die Glaswandung als Superstrat mit einer Oberseite und einer Unterseite ausgebildet. Dabei ist die Oberseite für den Lichteinfall vorgesehen und die Unterseite mit einer transparenten elektrisch leitfähigen Leitschicht bedeckt. An die Leitschicht schließt die Frontseite zumindest der Photokathode an. Es wird bei der Erfindung eine Superstratgeometrie eingesetzt, bei der sich der Halbleiter bezüglich des Lichteinfalls unterhalb des Trägers (der Träger befindet sich damit bezüglich des Lichteinfalls oberhalb (super) des Halbleiters) befindet und durch diesen hindurch beleuchtet wird. Die lichtundurchlässige Rückkontaktschicht dient zugleich als Elektrodenoberfläche, die im Kontakt mit dem Elektrolyten aus einem korrosionsbeständigen Material besteht. An die Rückkontaktschicht schließt im Fall der Photokathode eine Wasserstoff-Barriereschicht an, an diese eine Wasserstoff-Katalysatorschicht und an diese die kathodische Elektrolytkammer. Die Photokathode ist gegen die protonenleitende Membran elektrisch isoliert. Bei der beanspruchten photovoltaischen Hybrid-Elektrolysezelle erfolgt im Betriebsfall die Lichteinstrahlung ausschließlich durch das Superstrat. Es erfolgt keine Beleuchtung der wasserstofferzeugenden Photokathode durch den Elektrolyten hindurch. Die kathodische Elektrolytkammer befindet sich auf der Rückseite der Photokathode hinter der korrosionsbeständigen, lichtundurchlässigen Rückkontaktschicht. Das Halbleitermaterial der Photokathode hat keinen Kontakt mit dem wässrigen Elektrolyten (Distanz üblicherweise einige 100 nm), wodurch es keiner Elektrolysekorrosion unterworfen ist. Weiterhin ist durch die Trennung von Halbleiter und Elektrolyt die ansonsten komplexe Anpassung der elektrochemischen Potenziale zur Wasserstoff- (und auch Sauerstoff-) Entwicklung nicht mehr an die Absolutlagen von Leitungs- und Valenzband der verwendeten Halbleitermaterialien gebunden, sondern nur noch von der Absolutgröße der erzeugten Photospannung oberhalb der Zersetzungsspannung und von der Stromdichte an dem metallischen Rückkontakt abhängig. Die Bandanpassung der eingesetzten Halbleiter kann somit ausschließlich in Abhängigkeit von den Potenzialen bei der Wasserspaltung erfolgen, was besonders vorteilhaft ist. Die Potenziale unter Belichtung sind damit auch unabhängig von der Austrittsarbeit an der Grenzfläche Halbleiter/Metallkontakt. Somit muss keine Rücksicht mehr auf diese Austrittsarbeit und damit auf die Materialwahl der Rückkontakte genommen werden. Vielmehr ist das Potenzial an der Grenzfläche Metallkontakt/Elektrolyt zu berücksichtigen, das aber materialunabhängig ist, solange keine Korrosion eintritt. Zur Erreichung einer hohen Stromdichte kann somit ein entsprechendes leitfähiges Material mit einer hohen Korrosionsbeständigkeit für den Rückkontakt ausgewählt werden. Ebenfalls kann das Katalysatormaterial frei gewählt werden. Dies gilt insbesondere bei Nanopartikeln mit großer, nanoporöser Oberfläche zur Einstellung der erzeugten Photospannung auch für die Oberflächenverteilung zur Erzielung einer hohen Aktivität, da die Katalysatoranordnung und -bedeckung bei der Erfindung auf ihrer Anordnung auf der Rückelektrode auf der lichtabgewandten Rückseite der Photokathode nicht mehr verschattend wirkt.

Somit kann die beanspruchte Hybrid-Elektrolysezelle materialtechnisch und konstruktiv so aufgebaut werden, dass sie auch bei schnellen und häufigen Belichtungs- und Lastwechseln immer im optimalen Bereich des maximalen Arbeitspunkts (MPP) mit einer maximalen Effizienz arbeitet. Weiterhin ist die beanspruchte Hybrid-Elektrolysezelle mit dem vorbeschriebenen Aufbau insbesondere auch durch die zum halbleitenden Schichtaufbau senkrechte Anordnung der protonenleitenden Membran besonders flach ausführbar, sodass insbesondere nur eine relativ kleinflächige protonenleitende Membran benötigt wird.

Für den Prozess der photovoltaischen Wasser-Elektrolyse ist von der gesamten vorgesehenen Halbleiterstruktur eine Photospannung zu erzeugen, die oberhalb der Zersetzungsspannung (1,23 V; ΔG der Wasserspaltung) von Wasser liegt. In der Praxis ist eine Photospannung oberhalb von 1,48 V anzustreben, um nahe dem isothermen Punkt (ΔH der Wasserspaltung) der Elektrolysezelle zu arbeiten, der ein Einfrieren des Elektrolyten ausschließt. Bei der gezielten Erzeugung von Wasserstoff ist es vorteilhaft, wenn die Photospannung an der Photokathode möglichst hoch ist (> 1.6V). Bei einem entsprechenden Aufbau der photovoltaischen Struktur kann die Photokathode ausschließlich für die zur Zersetzung ausreichenden Photospannung sorgen, die Anode kann als Dunkelanode ohne Beitrag zur Spannungserzeugung betrieben werden. Alternativ kann auch die Anode als Photoanode ausgebildet sein, wobei der Lichteintrag in die Photoanode, an der Sauerstoff erzeugt wird, wieder in Superstratgeometrie erfolgt. Eine Ausbildung auch der Anode mit photovoltaischer Struktur macht jedoch nur Sinn, wenn sie auch dem Lichteinfall ausgesetzt ist.

Ist die Anode als Photoanode mit einem halbleitenden Schichtaufbau mit einer für Lichteinfall vorgesehenen Frontseite und einer eine elektrisch leitende Rückkontaktschicht tragenden Rückseite ausgebildet, kann sie bevorzugt und vorteilhaft in Bezug auf den Lichteinfall neben der Photokathode angeordnet sein. Dabei schließt die Frontseite der Photoanode an die Leitschicht auf der Unterseite des Glassubstrats an. In die aus einem korrosionsbeständigen Material bestehende Rückkontaktschicht der Photoanode ist der Sauerstoff-Katalysator integriert oder als Sauerstoff- Katalysatorschicht auf diese aufgebracht. An die katalysatormodifzierte Rückkontaktschicht der Photoanode oder an die Sauerstoff-Katalysatorschicht auf der Rückkontaktschicht schließt sich dann die anodische Elektrolytkammer an. Weiterhin ist die Photoanode gegen die protonenleitende Membran elektrisch isoliert, wobei Photokathode und Photoanode ausschließlich über die durchgängige Leitschicht auf der Unterseite des Superstrats elektrisch leitend miteinander verbunden sind. Dieser planare und laterale Aufbau der Hybrid-Elektrolysezelle nach der Erfindung kann ebenfalls besonders kompakt und flach gehalten werden. Die Besonderheit dieser Struktur ist darin begründet, dass die Fläche von Photoanode und Photokathode unterschiedlich groß gestaltet werden kann, um eine Anpassung an die unterschiedlichen Photostromdichten und eine Verringerung der Überspannungen der Teilreaktionen bei der Wasserstoff- bzw. Sauerstoffentwicklung an den Elektroden zu erreichen. Vorteilhaft sind daher eine entsprechende flächige Ausbildung von Photoanode und Photokathode und eine nanoporöse Oberfläche der Wasserstoff- und Sauerstoff-Katalysatorschicht, um den maximalen Arbeitspunkt der photovoltaischen Hybrid-Elektrolysezelle einzustellen. Um Überspannungen an der Photoanode (die Überspannung bei der Sauerstoffentwicklung an der Photoanode ist größer als die Überspannung bei der Wasserstoffentwicklung an der Photokathode) zu kompensieren, ist es bei der parallelen Anordnung von Photokathode und Photoanode in einer Ebene möglich, eine im Vergleich zur Photokathode größere Elektrodenfläche der Photoanode zu realisieren. Dabei kann die Elektrodenfläche der Photoanode durch Vorsehen einer nanoporösen Oberfläche noch weiter vergrößert werden. Weiterhin kann die Photoanode bereits in dieser Konstellation neben der Photokathode als Dunkelanode betrieben werden, d.h. dass der Lichteinfall in die Photoanode unberücksichtigt bleiben oder sogar auf die Photokathode umgelenkt werden kann.

Alternativ kann die Anode aber auch direkt als Dunkelanode ausgebildet sein. Ein Halbleiterschichtaufbau entfällt dann, die Anode besteht nurmehr aus dem elektrisch leitenden Rückkontakt in Verbindung mit dem Sauerstoff-Katalysator. Bei einer Ausbildung der Anode als Dunkelelektrode kann die Anode bevorzugt und vorteilhaft in Bezug auf den Lichteinfall hinter der Photokathode angeordnet sein. Die Frontseite der Anode ist dann lichtabgewandt und schließt an eine elektrisch leitfähige Leitschicht auf einem Substrat (das Substrat liegt unter (sub) der Anode) an. In diese Leitschicht ist der Sauerstoff-Katalysator integriert oder auf diese als Sauerstoff-Katalysatorschicht aufgebracht. An die katalysatormodifzierte Leitschicht oder die Sauerstoff-Katalysatorschicht schließt dann die anodische Elektrolytkammer an. Anodische und kathodische Elektrolytkammern liegen somit einander gegenüber, sind aber durch eine elektrisch isolierende, korrosionsbeständige Trennwand voneinander separiert. Über eine protonenleitende Membran sind sie jedoch mit einer zusätzlichen Elektrolytkammer verbunden, die ihrerseits gegenüber der Photokathode elektrisch isoliert ist. Weiterhin sind die Leitschicht und die zusätzliche Elektrolytkammer mit der Leitschicht auf dem Superstrat elektrisch leitend verbunden. Auch eine derartig konstruierte Hybrid-Elektrolysezelle nach der Erfindung kann besonders kompakt und flach mit einer kleinflächigen protonenleitenden Membran ausgestaltet werden. Die erzeugten Protonen gelangen von der anodischen Elektrolytkammer über die zusätzliche Elektrolytkammer in die kathodische Elektrolytkammer. Die protonenleitende Membran muss dabei nur den Übergang der Protonen von der einen wässrigen Elektrolytkammer in die nächste ermöglichen. Der Einsatz von Halbleitermaterial wird durch die Verwendung der Dunkelanode ohne Halbleitermaterial weiter verringert. Die für die Zersetzung benötigte Photospannung wird ausschließlich von der Photokathode erzeugt. Dafür ist es vorteilhaft und bevorzugt, wenn zumindest die Photokathode eine ein- oder mehrfache Dünnschicht-Halbleiterstruktur aufweist. Insbesondere bei Verwendung einer a-Si/pc-Si-Triplestruktur ergeben sich keine Einbußen bei der Stromdichte im Betrieb. Zur Realisierung der Photoelektroden können auch vorgefertigte Solarzellen eingesetzt werden, deren Rückkontaktschicht entsprechend katalysatormodifiziert sind. Im Betrieb kann sich die Erwärmung der photovoltaischen Hybrid-Elektrolysezelle effizienzsenkend auswirken. Vorteilhaft und bevorzugt ist es daher, wenn eine Durchflussregelung für den wässrigen Elektrolyten vorgesehen ist. Die Durchflussregelung kann zur Durchströmung der einzelnen Kammern im Zirkulations- oder Durchflussmodus mit einer ständigen Zuführung von frischem, kaltem Wasser eingesetzt werden.

Einen besonders kompakten Aufbau erhält die photovoltaische Hybrid-Elektrolysezelle nach der Erfindung auch mit einer Photoanode, wenn bevorzugt und vorteilhaft ein Gehäuse mit korrosionsbeständigen Wandungen und einem korrosionsbeständigen Boden vorgesehen ist, das auf seiner für Lichteinfall vorgesehenen Oberseite mit dem Superstrat abschließt, wobei die Photoanode und die Photokathode gegenüber den Wandungen elektrisch isoliert sind. Alternativ bei einer photovoltaischen Hybrid-Elektrolysezelle nur mit einer Photokathode kann bevorzugt ein Gehäuse mit korrosionsbeständigen Wandungen vorgesehen sein, das auf seiner für Lichteinfall vorgesehenen Oberseite mit dem Superstrat und auf seiner Unterseite mit dem Substrat abschließt, wobei die Dunkelanode und die Photokathode nur über eine elektrisch leitende Verbindung elektrisch leitend miteinander verbunden und ansonsten gegenüber den Wandungen elektrisch isoliert sind. Bei beiden Ausführungsvarianten kann ein besonders flacher Aufbau mit schmalen Wandungen realisiert werden, sodass auch nur eine schmale protonenleitende Membran benötigt wird. Weitere konstruktive Details können dem Ausführungsbeispiel entnommen werden.

Bevorzugt und vorteilhaft können für die einzelnen Komponenten der photovoltaischen Hybrid-Elektrolysezelle nach der Erfindung nachfolgende Materialien eingesetzt werden. Dabei ist es bei der Erfindung besonders günstig, dass nur das Superstrat lichtdurchlässig sein muss, alle anderen Komponenten können aus einem kostengünstigen lichtundurchlässigen Material bestehen, wobei sie jedoch bei Kontakt mit dem Elektrolyten korrosionsbeständig sein müssen. Da die energetischen Lagen von Valenz- und Leitungsbändern in den photovoltaischen Strukturen unter Belichtung und die Austrittsarbeit der die Rückkontakte bildenden Metalle von den energetischen Lagen der Potenziale zur Wasserstoff- bzw. Sauerstoffentwicklung an den Grenzflächen Rückkontakte/Elektrolyt in Bezug auf die elektrochemische Skala entkoppelt sind, muss keine Rücksicht mehr auf die Austrittsarbeit der verwendeten Leitermaterialien genommen werden. Hier kann eine freie Wahl erfolgen. Die Wahl der geeigneten Halbleitermaterialien erfolgt in üblicher Weise in Abhängigkeit ihrer Bandlücke (Absorption der einfallenden Photonen) und der zu erzeugenden Photospannung (oberhalb 1,48V Zersetzungsspannung).
- korrosionsbeständige Rückkontaktschicht: leitendes Oxid oder Metall: dotiertes SnO₂, In₂O₃, Ga₂O₃, TiO₂, WO₃
- Wasserstoffkatalysator: Metalle der Eisen-Platin-Gruppe (Fe, Ru, Os, Co, Rh, Ir, Ni, Pd, Pt) und deren Legierungen, CoS₂₋ₓ, NiS₂₋ₓ, (Mo₁₋ₓFeₓ)S_{2-y} und deren Komposite, Ni-Ni₁₋ₓO oder Titandisilizid
- Sauerstoffkatalysator: CoO; Mn₂O₃, Dotierungen, Legierungen sowie ternäre Phasen der binären Systeme NiO-CoO, NiO-Mn₂O₃, CoO- Mn₂O₃, CoO-Fe₂O₃, RuO₂-Fe₂O₃, Fe₂O₃-TiO₂, Fe₂O₃-WO₃
- Wasserstoff-Barriereschicht: Graphenschicht, dünne Graphitschicht oder wasserstoffblockierende, leitfähige Polymerschicht
- Dünnschicht-Halbleiterstruktur: auf Basis von amorphen und kristallinem, dotiertem oder undotiertem Silizium oder Chalkopyrit, an der Photoanode auch p-i-n Strukturen der Oxide Fe₂O₃ und BiVO₄; Einsatz von katalysatormodifizierten Solarzellen
- protonenleitende Membran: sulfoniertes Tetrafluorethylen-Polymer oder β-Al₂O₃,
- Leitschichten : leitende Oxidschicht, leitendes Polymer
- Superstrat, Substrat: Glas, beschichtetes Glas, Kunststoff und/oder
- Wandungen, Trennwand: korrosionsbeständiger Kunststoff.

### Ausführungsbeispiele

Die photovoltaische Hybrid-Elektrolysezelle nach der Erfindung mit ihren möglichen Modifikationen wird nachfolgend anhand der schematischen Figuren zum weiteren Verständnis der Erfindung näher erläutert. Dabei zeigt:
- **Figur 1**: eine Parallelanordnung von Photokathode und Photoanode,
- **Figur 2**: eine Reihenanordnung von Photokathode und Dunkelanode und
- **Figur 3**: eine perspektivische Darstellung der lateralen Anordnung.

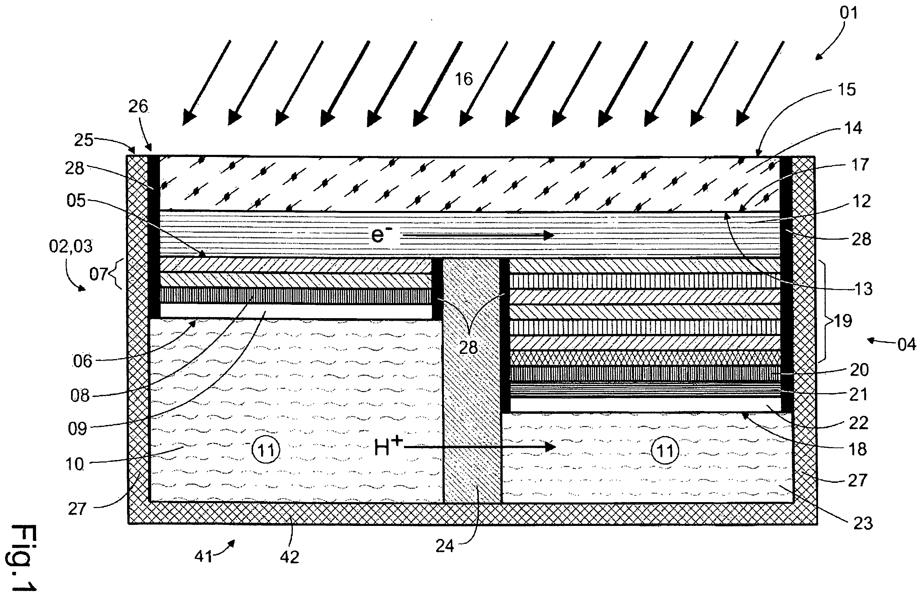

In der **Figur 1** ist schematisch eine photovoltaische Hybrid-Elektrolysezelle **01** nach der Erfindung dargestellt, in der die Anode **02** als Photoanode **03** ausgebildet und neben der Photokathode **04** angeordnet ist. Die Photoanode **03** weist eine Frontseite **05** und eine Rückseite **06** auf. Dazwischen befindet sich eine Halbleiterstruktur **07** (beispielsweise Si-basierte p-n- oder p-i-n Struktur). Auf der Rückseite **06** ist eine lichtundurchlässige, elektrisch leitende Rückkontaktschicht **08** angeordnet. Darauf befindet sich im gezeigten Ausführungsbeispiel eine Sauerstoff-Katalysatorschicht **09,** die beispielsweise elektrochemisch, durch ein Sol-Gel-Verfahren oder durch reaktives Sputtern abgeschieden worden ist. Alternativ kann der Sauerstoff-Katalysator auch in die Rückkontaktschicht **08** bei deren Herstellung integriert sein - es ergibt sich eine katalysatormodifzierte Rückkontaktschicht (nicht dargestellt). An die Rückseite **06** der Photoanode **03** schließt sich eine anodische Elektrolytkammer **10** an, sodass die Halbleiterstruktur **07** nicht mit einem wässrigen Elektrolyten **11** in Kontakt steht und von diesem korrodiert werden kann. Der Kontakt ergibt sich zu der Rückkontaktschicht **08,** die entsprechend korrosionsstabil ist. Auf der Frontseite **05** schließt die Photoanode **03** an eine durchgängige Leitschicht **12** (TCO-Schicht) auf der Unterseite **13** eines transparenten Superstrats **14** an. In die Oberseite **15** des transparenten Superstrats **14** fällt Licht **16** ein.

In Bezug auf den Lichteinfall **16** neben der Photoanode **03** ist die Photokathode **04** angeordnet. Die Photokathode **04** weist eine Frontseite **17** und eine Rückseite **18** auf. Dazwischen befindet sich eine Halbleiterstruktur **19** (beispielsweise Si-basierte p-i-n-Tandem- oder Triplestruktur oder a-Si/a-Si oder a-Si/a-SiGe-Schichtfolgenstruktur). Mit der Frontseite **17** schließt die Photokathode **04** ebenfalls an die durchgängige Leitschicht **12** auf der Unterseite **13** des Superstrats **14** an. Damit fällt das Licht **16** ausschließlich durch das Superstrat **14** in die Frontseiten **05,17** von Photoanode **03** und Photokathode **04** und nicht durch den Elektrolyten **11.** Auf der Rückseite weist die Photokathode **04** eine lichtundurchlässige, metallisch leitende Rückkontaktschicht **20** (Schichtdicke üblicherweise in einem Bereich von 500 nm) auf, die durch eine Wasserstoff-Barriereschicht **21** vor Wasserstoffdiffusion geschützt ist. Dabei schützt die Wasserstoff-Barriereschicht **21** auch die Halbleiterstruktur **19** vor Wasserstoffeinlagerungen. Diese können zu bedeutsamen elektronischen Veränderungen des Verhaltens der Halbleiterschichten führen. Auf die Wasserstoff-Barriereschicht **21** ist eine Wasserstoff-Katalysatorschicht **22** aufgebracht, an die sich die kathodische Elektrolytkammer **23** anschließt. Die kathodische Elektrolytkammer **23** und die anodische Elektrolytkammer **10** sind durch eine protonenleitende Membran **24** voneinander separiert bzw. protonenleitend miteinander verbunden.

Die genannten Komponenten sind in einem Gehäuse **25** angeordnet, dessen Oberseite **26** von dem Superstrat **14** abgeschlossen ist. Auf der Unterseite **41** befindet sich ein korrosionsbeständiger Boden **42.** Gegenüber den Wandungen **27** und der protonenleitenden Membran **24** sind Photoanode **03** und Photokathode **04** durch eine Isolierschicht **28** elektrisch isoliert. Der elektrische Strom (e⁻) wird durch die durchgängige Leitschicht **12** auf der Unterseite **13** des Superstrats **14** geleitet. Die Protonen (H⁺) wandern von der anodischen wässrigen Elektrolytkammer **10** durch die protonenleitende Membran **24** in die kathodische wässrige Elektrolytkammer **22.**

In der **Figur 2** ist schematisch eine photovoltaische Hybrid-Elektrolysezelle **01** nach der Erfindung dargestellt, bei der alternativ nur die halbleitende Photokathode **04** photoempfindlich ist. Die Anode **02** ist als Dunkelanode **29** ausgebildet. Die Photokathode **04** ist analog zu **Figur 1** ausgebildet (hier nicht erläuterte Bezugszeichen siehe dort) und weist eine Si-basierte p-i-n-Triplestruktur **30** auf, die eine Photospannung oberhalb der erforderlichen Zersetzungsspannung erzeugen kann. Im gezeigten Ausführungsbeispiel wird also nur die Photokathode **04** durch das Superstrat **14** hindurch beleuchtet. Die Dunkelanode **29** ist in Bezug auf den Lichteinfall **16** hinter der Photokathode **04** angeordnet. Dabei schließt die Frontseite **31** der Dunkelanode **29** an eine elektrisch leitfähige Leitschicht **32** (TCO-Schicht) auf einem Substrat **33** (kann aus Glas sein) an, das den Boden **42** des Gehäuses **25** bildet. Auf die Leitschicht **32** ist eine Sauerstoff-Katalysatorschicht **34** aufgebracht, die beispielsweise elektrochemisch oder durch reaktives Sputtern abgeschieden worden ist. Alternativ kann der Sauerstoff-Katalysator auch in die Leitschicht **32** bei deren Herstellung integriert sein - es ergibt sich eine katalysatormodifzierte Leitschicht (nicht dargestellt). An die Sauerstoff-Katalysatorschicht **34** schließt sich die anodische Elektrolytkammer **10** an. Somit liegen anodische Elektrolytkammer **10** und kathodische Elektrolytkammer **23** benachbart. Sie sind durch eine elektrisch isolierende, korrosionsbeständige Trennwand **35** voneinander separiert und über eine protonenleitende Membran **36** mit einer zusätzlichen Elektrolytkammer **37** verbunden. Diese ist gegenüber der Photokathode **04** durch eine Isolierschicht **38** elektrisch isoliert. Die Leitschicht **32** und die zusätzliche Elektrolytkammer **37** sind mit der durchgängigen Leitschicht **12** auf dem Superstrat **14** durch eine elektrisch leitende Verbindung **43** (TCO-Schicht auf der Wandung **27**) elektrisch leitend miteinander verbunden.

Die **Figur 3** zeigt eine perspektivische Ansicht der photovoltaischen Hybrid-Elektrolysezelle **01** mit einer lateralen Anordnung von Photoanode **03** und Photokathode **04** gemäß **Figur 1****,** die in Dünnschicht auf der durchgängigen Leitschicht **12** auf dem Superstrat **14** rückseitig aufgebracht sind. Das Gehäuse **25** mit den seitlichen Wandungen **27** und dem Boden **42** wurde zur besseren Einsicht nicht dargestellt. Durch das Superstrat **14** fällt das Licht **16** in die Oberseiten von Photoanode **03** und Photokathode **04.** Deutlich ist die flache Ausbildung der Hybrid-Elektrolysezelle **01** und die nur kleinflächige protonenleitende Membran **24** zu erkennen. Weiterhin sind eine Sauerstoffableitung **39** und eine davon getrennte Wasserstoffableitung **40** dargestellt, die in Sammelräume **44** für Sauerstoff- und Wasserstoffgas oberhalb des Elektrolyten **10** führen. In **Figur 3** sind Regeleinrichtungen und Leitungen, die eine Zirkulation des wässrigen Elektrolyten **10** zu Kühlzwecken und ein Nachfüllen verbrauchten Elektrolyts **10** erlauben, nicht dargestellt

### Bezugszeichenliste

- **01**: photovoltaische Hybrid-Elektrolysezelle
- **02**: Anode
- **03**: Photoanode
- **04**: Photokathode
- **05**: Frontseite von 03
- **06**: Rückseite von 03
- **07**: Halbleiterstruktur von 03
- **08**: Rückkontaktschicht von 03
- **09**: Sauerstoff-Katalysatorschicht von 03
- **10**: anodische Elektrolytkammer
- **11**: wässriger Elektrolyt
- **12**: durchgängige Leitschicht auf 14
- **13**: Unterseite von 14
- **14**: transparentes Superstrat
- **15**: Oberseite von 14
- **16**: Lichteinfall
- **17**: Frontseite von 04
- **18**: Rückseite von 04
- **19**: Halbleiterstruktur von 04
- **20**: Rückkontaktschicht von 04
- **21**: Wasserstoff-Barriereschicht
- **22**: Wasserstoff-Katalysatorschicht
- **23**: kathodische Elektrolytkammer
- **24**: protonenleitende Membran
- **25**: Gehäuse
- **26**: Oberseite von 25
- **27**: Wandung von 25
- **28**: Isolierschicht
- **29**: Dunkelanode
- **30**: Triplestruktur
- **31**: Frontseite von 29
- **32**: Leitschicht auf 33
- **33**: Substrat
- **34**: Sauerstoff-Katalysatorschicht
- **35**: Trennwand
- **36**: protonenleitende Membran
- **37**: zusätzliche Elektrolytkammer
- **38**: Isolierschicht
- **39**: Sauerstoffableitung
- **40**: Wasserstoffableitung
- **41**: Unterseite von 25
- **42**: Boden von 25
- **43**: elektrisch leitende Verbindung 32/12
- **44**: Sammelraume

## Patentansprüche

1. Photovoltaische Hybrid-Elektrolysezelle, die der direkten lichtinduzierten Wasserzersetzung zur Wasserstofferzeugung bei einer Zersetzungsspannung oberhalb 1,23 V dient, mit einem transparenten Superstrat mit einer Oberseite, durch die im Betrieb das Licht hindurchfällt, und einer Unterseite, die mit einer transparenten elektrisch leitfähigen Leitschicht zumindest teilweise bedeckt ist, an deren Frontseite zumindest eine Kathode anschließt, sowie mit einer Anode und mit einem halbleitenden Schichtaufbau mit einer für den Lichteinfall vorgesehenen Frontseite und einer eine elektrisch leitende, lichtundurchlässige Rückkontaktschicht tragenden Rückseite, wobei die Anode und die Kathode elektrisch leitend miteinander verbunden sind, der Anode eine anodische Elektrolytkammer mit einem wässrigen Elektrolyten und einem Sauerstoff-Katalysator und der Kathode eine kathodische Elektrolytkammer mit einem wässrigen Elektrolyten und einer Wasserstoff-Katalysatorschicht zugeordnet sind und die anodische und die kathodische Elektrolytkammer durch eine protonenleitende Membran, die gegen die Kathode elektrisch isoliert und senkrecht zum halbleitenden Schichtaufbau angeordnet ist, voneinander separiert sind, sowie mit einer Isolationsschicht zwischen der Wasserstoff-Katalysatorschicht und der Rückkontaktschicht der Kathode,
**dadurch gekennzeichnet, dass**
die Kathode als Photokathode (04) mit ein- oder mehrfachen Dünnschicht-Halbleiterstrukturen und die Isolationsschicht als elektrisch leitfähige Wasserstoff-Barriereschicht (21) ausgebildet und ausschließlich auf der Rückkontaktschicht (20) der Photokathode (04), die aus einem korrosionsbeständigen Material besteht, angeordnet ist, und dass die Leitschicht (12) als durchgängige Schicht auf der Unterseite (13) des Superstrats (14) ausgebildet ist.

2. Photovoltaische Hybrid-Elektrolysezelle nach Anspruch 1,
**dadurch gekennzeichnet, dass**
die Anode (02) als Photoanode (03) mit einem halbleitenden Schichtaufbau mit einer für Lichteinfall (16) vorgesehenen Frontseite (05) und einer eine elektrisch leitende Rückkontaktschicht (08) tragenden Rückseite (06) ausgebildet und in Bezug auf den Lichteinfall (16) neben der Photokathode (04) angeordnet ist, wobei die Frontseite (05) der Photoanode (03) an die durchgängige Leitschicht (12) auf der Unterseite (13) des Superstrats (14) anschließt, in die aus einem korrosionsbeständigen Material bestehende Rückkontaktschicht (08) der Photoanode (03) der Sauerstoff-Katalysator integriert ist oder auf diese als Sauerstoff-Katalysatorschicht (09) aufgebracht ist, an die katalysatormodifzierte Rückkontaktschicht (08) der Photoanode (03) oder an die Sauerstoff-Katalysatorschicht (09) die anodische Elektrolytkammer (10) anschließt und die Photoanode (03) gegen die protonenleitende Membran (24) elektrisch isoliert ist, wobei Photokathode (04) und Photoanode (03) ausschließlich über die durchgängige Leitschicht (12) elektrisch leitend miteinander verbunden sind.

3. Photovoltaische Hybrid-Elektrolysezelle nach Anspruch 1,
**dadurch gekennzeichnet, dass**
die Anode (02) als Dunkelanode (29) ausgebildet und in Bezug auf den Lichteinfall (16) hinter der Photokathode (04) angeordnet ist, wobei die Frontseite (31) der Dunkelanode (29) an eine elektrisch leitfähige Leitschicht (32) auf einem Substrat (33) anschließt, in die Leitschicht (32) der Sauerstoff-Katalysator integriert oder auf diese als Sauerstoff-Katalysatorschicht (34) aufgebracht ist, an die katalysatormodifzierte Leitschicht oder die Sauerstoff-Katalysatorschicht (34) die anodische Elektrolytkammer (10) anschließt, die anodische Elektrolytkammer (10) und die kathodische Elektrolytkammer (23) durch eine elektrisch isolierende, korrosionsbeständige Trennwand (35) voneinander separiert und über eine protonenleitende Membran (36) mit einer zusätzlichen Elektrolytkammer (37), die gegenüber der Photokathode (4) elektrisch isoliert ist, verbunden sind und die Leitschicht (32) auf dem Substrat (33) und die zusätzliche Elektrolytkammer (37) mit der durchgängigen Leitschicht (12) auf dem Superstrat (14) elektrisch leitend verbunden sind.

4. Photovoltaische Hybrid-Elektrolysezelle nach Anspruch 2,
**dadurch gekennzeichnet, dass**
durch eine flächige Ausbildung von Photoanode (03) und Photokathode (04) und eine nanoporöse Oberfläche der Wasserstoff- und Sauerstoff-Katalysatorschicht (22, 34).

5. Photovoltaische Hybrid-Elektrolysezelle nach zumindest einem der vorangehenden Ansprüche,
**dadurch gekennzeichnet, dass**
eine Durchflussregelung für den wässrigen Elektrolyten (11) zur Durchströmung der anodischen (10), kathodischen (23) und zusätzlichen Elektrolytkammer (37) im Zirkulations- oder Durchflussmodus vorgesehen ist, wobei dem wässrigen Elektrolyten (11) kaltes Wasser zuführbar ist.

6. Photovoltaische Hybrid-Elektrolysezelle nach Anspruch 2 und nach Anspruch 4 oder 5,
**dadurch gekennzeichnet, dass**
ein Gehäuse (25) mit korrosionsbeständigen Wandungen (27) und einem korrosionsbeständigen Boden vorgesehen ist, das auf seiner für Lichteinfall (16) vorgesehenen Oberseite (26) mit dem Superstrat (14) abschließt, wobei die Photoanode (03) und die Photokathode (04) gegenüber den Wandungen (27) elektrisch isoliert sind.

7. Photovoltaische Hybrid-Elektrolysezelle nach Anspruch 3 und zumindest einem der Ansprüche 4 bis 6,
**dadurch gekennzeichnet, dass**
ein Gehäuse (25) mit korrosionsbeständigen Wandungen (27) vorgesehen ist, das auf seiner für Lichteinfall (16) vorgesehenen Oberseite (26) mit dem Superstrat (14) und auf seiner Unterseite (41) mit dem Substrat (33) abschließt, wobei die Dunkelanode (29) und die Photokathode (04) nur über eine elektrisch leitende Verbindung (43) elektrisch leitend miteinander verbunden und ansonsten gegenüber den Wandungen (27) elektrisch isoliert sind.

8. Photovoltaische Hybrid-Elektrolysezelle nach zumindest einem der vorangehenden Ansprüche,
**gekennzeichnet durch** nachfolgende Materialwahl
• korrosionsbeständige Rückkontaktschicht (08, 20): leitendes Oxid oder Metall: dotiertes SnO₂, In₂O₃, Ga₂O₃, TiO₂, WO₃
• Wasserstoffkatalysator (22): Metalle der Eisen-Platin-Gruppe (Fe, Ru, Os, Co, Rh, Ir, Ni, Pd, Pt) und deren Legierungen; CoS₂₋ₓ, NiS₂₋ₓ, (Mo₁₋ₓFeₓ)S_{2-y} und deren Komposite, Ni-Ni₁₋ₓO und Titandisilizid
• Sauerstoffkatalysator (34): CoO, Mn₂O₃, Dotierungen, Legierungen sowie ternäre Phasen der binären Systeme NiO-CoO, NiO-Mn₂O₃, CoO- Mn₂O₃, CoO-Fe₂O₃, RuO₂-Fe₂O₃, Fe₂O₃-TiO₂ und Fe₂O₃-WO₃
• Wasserstoff-Barriereschicht (21): Graphenschicht, dünne Graphitschicht oder wasserstoffblockierende, leitfähige Polymerschicht,
• Dünnschicht-Halbleiterstruktur (07, 30): auf Basis von amorphen und kristallinem, dotiertem oder undotiertem Silizium oder Chalkopyrit, an der Photoanode auch p-i-n Strukturen der Oxide Fe₂O₃ und BiVO₄, Einsatz von katalysatormodifizierten Solarzellen
• protonenleitende Membran (24, 36): sulfoniertes Tetrafluorethylen-Polymer oder β-Al₂O_{3,}
• Leitschichten (12, 32, 43): leitende Oxidschicht, leitendes Polymer
• Superstrat (14), Substrat (33): Glas, beschichtetes Glas, Kunststoff und/oder
• Wandungen (27), Trennwand (35): korrosionsbeständiger Kunststoff.

## Claims

1. Photovoltaic hybrid electrolysis cell which is used for the direct light-induced decomposition of water to produce hydrogen at a decomposition voltage above 1.23 V, comprising a transparent superstrate with an upper side through which light is incident during operation and an underside which is at least partially covered by a transparent electrically conducting conductive layer (12), the front side of which is adjoined by at least one cathode, and comprising an anode and comprising a semiconducting layer structure with a front side provided for the incidence of light and a rear side carrying an electrically conducting light-impermeable rear contact layer, wherein the anode and the cathode are connected to one another in an electrically conducting manner, the anode is assigned an anodic electrolyte chamber with an aqueous electrolyte and an oxygen catalyst and the cathode is assigned a cathodic electrolyte chamber with an aqueous electrolyte and a hydrogen catalyst layer, and the anodic and the cathodic electrolyte chambers are separated from one another by a proton-conducting membrane which is electrically insulated with respect to the cathode and is arranged perpendicular to the semiconducting layer structure, and comprising an insulation layer between the hydrogen catalyst layer and the rear contact layer of the cathode, **characterized in that** the cathode is configured as a photocathode (04) with single or multiple thin-layer semiconductor structures and the insulation layer is configured as an electrically conductive hydrogen barrier layer (21) and is arranged exclusively on the rear contact layer (20) of the photocathode (04) which consists of a corrosion-resistant material and that the conductive layer (12) is configured as a continuous layer on the underside (13) of the superstrate (14).

2. The photovoltaic hybrid electrolysis cell according to claim 1, **characterized in that** the anode (02) is configured as a photoanode (03) with a semiconducting layer structure having a front side (05) provided for incidence of light (16) and a rear side (06) carrying an electrically conducting rear contact layer (08) and is arranged adjacent to the photocathode (04) in relation to the incidence of light (16), wherein the front side (05) of the photoanode (03) adjoins the continuous conductive layer (12) on the underside (13) of the superstrate (14), the oxygen catalyst is integrated in the rear contact layer (08) of the photoanode (03) consisting of a corrosion-resistant material or is applied to this as an oxygen catalyst layer (09), the catalyst-modified rear contact layer (08) of the photoanode (03) or the oxygen catalyst layer (09) is adjoined by the anodic electrolyte chamber (10) and the photoanode (03) is electrically insulated towards the proton-conducting membrane (24), wherein photocathode (04) and photoanode (03) are connected to one another in an electrically conducting manner exclusively via the continuous conductive layer (12).

3. The photovoltaic hybrid electrolysis cell according to claim 1, **characterized in that** the anode (02) is configured as a dark anode (29) and is arranged behind the photocathode in relation to the incidence of light (16), wherein the front side (31) of the dark anode (29) adjoins an electrically conductive conducting layer (32) on a substrate (33), the oxygen catalyst is integrated in the conductive layer (32) or is applied to this as oxygen catalyst layer (34), the anodic electrolyte chamber (10) adjoins the catalyst-modified conductive layer or the oxygen catalyst layer (34), the anodic electrolyte chamber (10) and the cathodic electrolyte chamber (23) are separated from one another by an electrically insulating corrosion-resistant dividing wall (35) and are connected via a proton-conducting membrane (36) to an additional electrolyte chamber (37) which is electrically insulated with respect to the photocathode (4) and the conductive layer (32) on the substrate (33) and the additional electrolyte chamber (37) are connected to the continuous conductive layer (12) on the superstrate (14) in an electrically conductive manner.

4. The photovoltaic hybrid electrolysis cell according to claim 2, **characterized by** a flat configuration of photoanode (03) and photocathode (04) and a nanoporous surface of the hydrogen and oxygen catalyst layer (22, 34).

5. The photovoltaic hybrid electrolysis cell according to at least one of the preceding claims, **characterized in that** a flow regulation is provided for the aqueous electrolyte (11) for flow through the anodic (10), cathodic (23) and additional electrolyte chamber (37) in the circulation and through-flow mode, wherein cold water can be supplied to the aqueous electrolyte (11).

6. The photovoltaic hybrid electrolysis cell according to claim 2 and according to claim 4 or 5, **characterized in that** a housing (25) with corrosion-resistant walls (27) and a corrosion-resistant base is provided which terminates with the superstrate (14) on its upper side (26) provided for incidence of light (16), wherein the photoanode (03) and the photocathode (04) are electrically insulated with respect to the walls (27).

7. The photovoltaic hybrid electrolysis cell according to claim 3 and at least one of claims 4 to 6, **characterized in that** a housing (25) with corrosion-resistant walls (27) is provided which terminates with the superstrate (14) on its upper side (26) provided for incidence of light (16) and terminates with the substrate (33) on its underside (41), wherein the dark anode (29) and the photocathode (04) are only connected to one another in an electrically conducting manner via an electrically conducting compound (43) and are otherwise electrically insulated with respect to the walls (27).

8. The photovoltaic hybrid electrolysis cell according to at least one of the preceding claims, **characterized by** the following choice of material
- corrosion-resistant rear contact layer (08, 20): conducting oxide or metal: doped SnO₂, In₂O₃, Ga₂O₃, TiO₂, WO₃
- hydrogen catalyst (22): metals of the iron platinum group (Fe, Ru, Os, Co, Rh, Ir, Ni, Pd, Pt) and alloys thereof: CoS₂₋ₓ, NiS₂₋ₓ, (Mo₁₋ₓ)Feₓ)S_{2-y} and composites thereof, Ni-Ni₁₋ₓO and titanium disilicide,
- oxygen catalyst (34): CoO, Mn₂O₃, dopings, alloys as well as ternary phases of the binary systems NiO-CoO, NiO-Mn₂O₃, CoO-Mn₂O₃, CoO-Fe₂O₃, RuO₂-Fe₂O₃, Fe₂O₃-TiO₂ and Fe₂O₃-WO₃
- hydrogen barrier layer (21): graphene layer, thin graphite layer or hydrogen-blocking, conductive polymer layer,
- thin-film semiconductor structure (07, 30): based on amorphous and crystalline, doped or undoped silicon or chalcopyrite, at the photoanode also p-i-n structures of the oxides Fe₂O₃ and BiVO₄, use of catalyst-modified solar cells
- proton-conducting membrane (24, 36): sulphonated tetrafluoroethylene polymer or β-Al₂O₃
- conductive layers (12, 32, 43): conducting oxide layer, conducting polymer
- superstrate (14), substrate (33): glass, coated glass, plastic and/or
- walls (27), dividing wall (35): corrosion-resistant plastic.

## Revendications

1. Cellule photovoltaïque hybride électrolytique qui sert à la décomposition directe d'eau induite par la lumière, pour produire de l'hydrogène à une tension de décomposition supérieure à 1,23 V, avec une strate supérieure transparente avec une face supérieure à travers laquelle la lumière tombe en service et une face inférieure qui est recouverte au moins en partie par une couche conductrice transparente, conductrice d'électricité, sur la face frontale de laquelle se raccorde au moins une cathode, ainsi qu'avec une anode et avec une structure stratifiée semi-conductrice, avec une face frontale prévue pour l'incidence de la lumière et une face arrière portant une couche de rétro-contact opaque, conductrice d'électricité, l'anode et la cathode étant connectées l'une à l'autre de manière à conduire l'électricité, à l'anode étant associée une chambre électrolytique anodique avec un électrolytique aqueux et un catalyseur d'oxygène et à la cathode étant associée une chambre électrolytique cathodique avec un électrolyte cathodique et une couche de catalyseur d'hydrogène et la chambre électrolytique anodique et la chambre électrolytique cathodique étant séparées l'une de l'autre par une membrane conductrice de protons, qui est électriquement isolée par rapport à la cathode et qui est placée à la perpendiculaire de la structure stratifiée semi-conductrice, ainsi qu'avec une couche d'isolation entre la couche de catalyseur d'hydrogène et la couche de rétro-contact de la cathode,
**caractérisée en ce que**
la cathode est conçue en tant que photocathode (04) avec une ou plusieurs structures semi-conductrices en couches minces et la couche d'isolation est conçue en tant que couche formant barrière (21) à l'hydrogène, conductrice d'électricité et étant placée exclusivement sur la couche de rétro-contact (20) de la photocathode (04) qui est constituée d'une matière résistant à la corrosion et **en ce que** la couche conductrice (12) est conçue en tant que couche continue sur la face inférieure (13) de la strate supérieure (14).

2. Cellule photovoltaïque hybride électrolytique selon la revendication 1,
**caractérisée en ce que**
l'anode (02) est conçue en tant que photoanode (03) avec une structure stratifiée semi-conductrice, avec une face frontale (05) prévue pour l'incidence de lumière (16) et une face arrière (06) portant une couche de rétro-contact (08) conductrice d'électricité et en rapport à l'incidence de lumière (16), est placée à côté de la photocathode (04), la face frontale (05) de la photoanode (03) se raccordant sur la couche conductrice (12) continue sur la face inférieure (13) de la strate supérieure (14), dans la couche de rétro-contact (08) constituée d'une matière résistant à la corrosion de la photoanode (03) le catalyseur d'oxygène est intégré ou appliqué sur celle-ci en tant que couche (09) de catalyseur d'oxygène, à la couche de rétro-contact (08) modifiée par catalyseur de la photoanode (03) ou à la couche (09) de catalyseur d'oxygène se raccorde la chambre électrolytique anodique (10) et la photoanode (03) est électriquement isolée par rapport à la membrane (24) conductrice de protons, la photocathode (04) et la photoanode (03) étant connectées l'une à l'autre de manière à conduire l'électricité exclusivement par l'intermédiaire de la couche conductrice (12) continue.

3. Cellule photovoltaïque hybride électrolytique selon la revendication 1,
**caractérisée en ce que**
l'anode (02) est conçue en tant qu'anode sombre (29) et par rapport à l'incidence de lumière (16) est placée derrière la photocathode (04), la face frontale (31) de l'anode sombre (29) se raccordant sur une couche conductrice (32) conductrice d'électricité sur un substrat (33), dans la couche conductrice (32) le catalyseur d'oxygène est intégré ou appliqué sur celle-ci en tant que couche (34) de catalyseur d'oxygène, à la couche conductrice modifiée par catalyseur ou à la couche (34) de catalyseur d'oxygène se raccorde la chambre électrolytique cathodique (23), la chambre électrolytique anodique (10) et la chambre électrolytique cathodique (23) sont séparées l'une de l'autre par une paroi de séparation (35) électriquement isolée, résistant à la corrosion et sont reliées par l'intermédiaire d'une membrane (36) conductrice de protons avec une chambre électrolytique (37) supplémentaire qui est électriquement isolée par rapport à la photocathode (4) et la couche conductrice (32) sur le substrat (33) et la chambre électrolytique (37) supplémentaire sont connectées de manière à conduire l'électricité sur la couche conductrice (12) sur la strate supérieure (14).

4. Cellule photovoltaïque hybride électrolytique selon la revendication 2,
**caractérisée par**
une conception plane de la photoanode (03) et de la photocathode (04) et une surface nanoporeuse de la couche de catalyseur d'hydrogène et d'oxygène (22, 34).

5. Cellule photovoltaïque hybride électrolytique selon l'une quelconque des revendications précédentes
**caractérisée en ce**
**qu'**il est prévu une régulation du débit pour l'électrolytique (11) aqueux pour la circulation à travers les chambres électrolytiques anodique (10), cathodique (23) et supplémentaire (37) en mode circulation ou écoulement, de l'eau froide pouvant être amenée à l'électrolyte (11) aqueux.

6. Cellule photovoltaïque hybride électrolytique selon la revendication 2 et selon la revendication 4 ou la revendication 5,
**caractérisée en ce**
**qu'**il est prévu un boîtier (25) avec des parois (27) résistant à la corrosion et un fond résistant à la corrosion, qui sur sa face supérieure (26) prévue pour l'incidence de lumière (16) se termine sur la strate supérieure (14), la photoanode (03) et la photocathode (04) étant électriquement isolées par rapport aux parois (27).

7. Cellule photovoltaïque hybride électrolytique selon la revendication 3 et au moins l'une quelconque des revendications 4 à 6,
**caractérisée en ce**
**qu'**il est prévu un boîtier (25) avec des parois (27) résistant à la corrosion, qui sur sa face supérieure (26) prévue pour l'incidence de lumière (16) se termine sur la strate supérieure (14) et sur sa face inférieure (41) se termine sur le substrat (33),
l'anode sombre (29) et la photocathode (04) n'étant connectées entre elles de manière à conduire l'électricité que par une connexion (43) conductrice d'électricité et par ailleurs, étant électriquement isolées par rapport aux parois (27).

8. Cellule photovoltaïque hybride électrolytique selon au moins l'une quelconque des revendications précédentes,
**caractérisée par** le choix de matières suivant :
- couche de rétro-contact (08, 20) résistant à la corrosion : oxyde conducteur ou métal : Sn02, In₂O₃, Ga₂O₃, TiO₂, WO₃ dopé,
- catalyseur d'hydrogène (22) : métaux du groupe fer-platine (Fe, Ru, Os, Co, Rh, Ir, Ni, Pd, Pt) et leurs alliages ; CoS₂₋ₓ, NiS₂₋ₓ, (Mo₁₋ₓFeₓ)S_{2-y} et leurs composites, Ni-Ni₁₋ₓO et disilicide de titane,
- catalyseur d'oxygène (34) : CoO, Mn₂O₃, dopants, alliages ainsi que phases ternaires des systèmes binaires NiO-CoO, NiO-Mn₂O₃, CoO-Mn₂O₃, CoO-Fe₂O₃, RuO₂-Fe₂O₃, Fe₂O₃-TiO₂ et Fe₂O₃-WO₃,
- couche formant barrière à l'hydrogène (21) : couche au graphène, mince couche de graphite ou couche d'un polymère conducteur, bloquant l'hydrogène,
- structure semi-conductrice à couches minces (07, 30) : sur base de silicium dopé ou non dopé ou de chalcopyrite amorphes et cristallins, sur la photoanode, également structures p-i-n des oxydes Fe₂O₃ et BiVO₄, utilisation de cellules solaires modifiées par catalyseur,
- membrane conductrice de protons (24, 36) : polymère de tétrafluoroéthylène sulfoné ou β-Al₂O₃,
- couches conductrices (12, 32, 43) : couche d'oxyde conductrice, polymère conducteur,
- strate supérieure (14), substrat (33) : verre, verre revêtu, matière plastique et/ou
- parois (27), paroi de séparation (35) : matière plastique résistant à la corrosion.
